# EUROPEAN PATENT SPECIFICATION

(11) **EP 1 237 309 B1**
(45) Date of publication and mention of the grant of the patent: **29.09.2004**
(21) Application number: 02075004.8
(22) Date of filing: 03.01.2002
(51) Int. Cl.: H04B 10/24, H04L 12/00

(54) **Fiber optic communication system**
Faseroptisches Übertragungssystem
Système de communication par fibres optiques

(30) Priority: 03.01.2001 US 753513
(43) Date of publication of application: 04.09.2002
(73) Proprietor: PacketLight Networks Ltd., Kfar Saba 44641 (IL)
(72) Inventor: Mesh, Michael, Kfar Saba 44405 (IL); Porat, Yuval, Ramat Aviv 69058 (IL); Kollmann, Meir, Ra'anana 43272 (IL); Nachman, Yaron, Petah Tikva (IL)
(74) Representative: Mertens, Hans Victor

(56) References cited:
- MASETTI F ET AL: "PHOTONIC ACCESS CONCENTRATOR FOR ATM GIGABIT SWITCHING FABRICS" JOURNAL OF LIGHTWAVE TECHNOLOGY, IEEE. NEW YORK, US, vol. 13, no. 11, 1 November 1995 (1995-11-01), pages 2142-2151, XP000597516 ISSN: 0733-8724
- ENG K Y ET AL: "A FRAMEWORK FOR A NATIONAL BROADBAND (ATM/B-ISDN) NETWORK" INTERNATIONAL CONFERENCE ON COMMUNICATIONS. INCLUDING SUPERCOMM TECHNICAL SESSIONS. ATLANTA, APR. 15 - 19, 1990, NEW YORK, IEEE, US, vol. 2, 15 April 1990 (1990-04-15), pages 515-520, XP000146117
- BOUSTEAD P ET AL: "CLASSIFICATION AND COMPARISON OF SCHEMES FOR PROVIDING SCALABLE IP SERVICES OVER ATM NETWORKS" IEEE INTERNATIONAL CONFERENCE ON NETWORKS, BRISBANE, QLD, AUSTRALIA, 28 September 1999 (1999-09-28) - 1 October 1999 (1999-10-01), pages 195-202, XP001063127

## Description

### FIELD OF THE INVENTION

The present invention relates to fiber optic communication systems in general and, in particular, to a system for propagation of data between source and destination points over an optical metro access communication system.

### BACKGROUND OF THE INVENTION

Access communication systems have become more widespread in recent years. These systems permit the transfer of information from one location to another, according to a variety of protocols, over different networks, most commonly the IP (Internet Protocol) network, the TDM (Time Division Multiplexing) network, and the ATM (Asynchronous Transmission Mode) network. Typically, data according to these protocols is transmitted optically over optical fibers, such as by means of DWDM (Dense Wavelength Division Multiplexing) which permit the transmission of significantly greater bandwidth than over traditional copper wires.

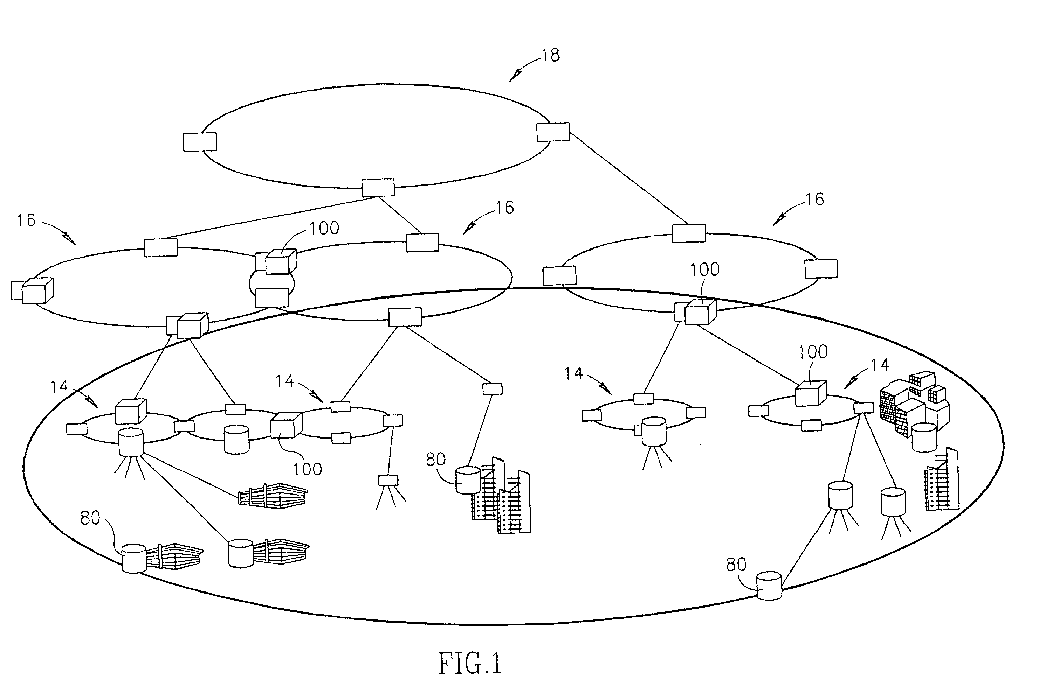

Networks of varying sizes and data rates have been established for transmission of data throughout the world. These networks are illustrated schematically in Fig. 1. The smallest networks, at a local level, are known as local or enterprise networks. A plurality of local networks, which are located close to one another physically, typically are joined in a metro access network 14, which can cover a city, for example, A plurality of metro access networks 14 are joined together in a metro backbone network 16, covering a number of cities or a country, and, finally, a long haul backbone 18 couples several countries or metro backbones for long distance transmission.

A variety of switches are used to put information onto these networks. In part, these switches are required to change the data rate at which the data is transported. This, however, is not consistent throughout the world. Thus, different data rates are used in corresponding levels of networks in different locations. For example, local access networks transmit over limited bandwidth, at data rates varying from T1,E1 (1.5-2 Megabits per second) to Gigabit Internet, and metro access networks between about OC-12 (622 Megabits per second) to OC-48 (2.5 Gigabits per second), while metro backbone and long haul backbone have data transmission at rates of 2.5 Gigabits per second and OC-48 times the number of wavelengths available and up to 10 Gigabits per second with DWDM optional network bandwidth expansion, so as to permit the transmission of increasing quantities of data.

In order to increase the number of users on a given system, it has become important to increase the bandwidth of the transmissions, and/or to increase the speed of transmission, while taking into account the Quality of Service (QoS) provided to each customer. In addition, different transmission networks transmit at different bit rates, due to different network topologies. There are Wavelength Division Multiplexing (WDM) networks, where data is transmitted over a plurality of wavelengths, each wavelength being associated with a different service. There are phone lines which effectively combine a plurality of users on a single line, known as T1 and T3. The Synchronous Optical Network, known as SONET and, internationally, as SDH, is an international standard for connecting fiber-optic transmission systems. The standard defines a hierarchy of interface rates that allow data streams at different rates to be multiplexed. With the implementation of SONET, communication carriers throughout the world can interconnect their existing digital carrier and fiber optic systems.

Another current solution is Dense Wavelength Division Multiplexing (DWDM). DWDM is an optical technology used to increase bandwidth over existing fiber optic backbones. DWDM works by combining and transmitting multiple signals simultaneously at different wavelengths on the same fiber. In effect, one fiber is transformed into multiple virtual fibers, One can multiplex sixteen OC-48 signals into one fiber, and increase the carrying capacity of that fiber from 2.5 Gigabits/sec to 40 Gigabits/sec. Currently, because of DWDM, single fibers have been able to transmit data at speeds up to 400 Gigabits/sec and more. And, as vendors add more channels to each fiber, terabit capacity is on its way.

The article of Masetti, et al: "Photonic access concentrator for ATM Gigabit Switching Fabrics", Journal of light wave technology, IEEE, New York, vol. 13, no. 11, 1 November 1995, pages 2142-2151 describes a photonic access concentrator for ATM Gigabit switching fabrics. The photonic access concentrator includes a traffic concentrator and a cell multiplexer. The concentrator receives the incoming traffic consisting of ATM cells and performs concentration and multiplexing. Data entering the system has been converted into ATM cells.

The article Eng, K.Y. et al: "A framework for a national broadband (ATM/B-ISDN) network" international confluence on communications, including Supercomm Technical Sessions, Atlanta, April 15-19, 1990, New York, IEEE, vol. 2, 15 April 1990, pages 515-520 describes a framework for a national broadband ATM/B-ISDN network. Each network node is a high performance ATM packet switch, which accepts input cells at a selected rate and serves both as a LAN to LAN interconnect and as packet concentrator for traffic destined to other network nodes and LAN's.

All these prior art systems are limited in that data according to each separate protocol must be received in a central office and processed, in order to permit connection to a network. Thus, as stated above, a separate network is required for IP, ATM, and TDM transmissions. In order to permit transmission of data which does not fall under one of these categories, it is necessary to convert the data, at the source and at the destination, to (or from) one of the protocols which can be transmitted over the network. Thus, each end user must use protocol conversion equipment. Furthermore, none of these systems takes advantage of the full capacity of optical fibers.

Accordingly, there is a long felt need for a metro access communication system which optimizes the use of optical fibers, and it would be very desirable to have such a system which provides increased bandwidth but with reduced complexity in the overall communication system.

### Summary of the invention

The present invention provides a data transmission system, which optimizes usage of the bandwith capacity of optical fibers, and reduces the investment in equipment required at each local site in the network. This is achieved by implementing a novel method of organizing data, to be transmitted in packets, which permits the transfer of data according to different protocols as is, without conversion from one protocol to another. The various services are collected at a local service collection unit, also called an Optical Network Terminal (ONT) in the specification, process into packets, and transmitted to an aggregator, which sorts the services from each service collection unit and joins together similar services from the various service collection units for transmission over the appropriate network.

According to the present invention, there is provided a system for data transmission over an optical network, the system including at least one service collection unit including a collection module for collecting a plurality of services data to be transmitted, a processing module for processing the services in their original protocols into packets, and a packet transmission module for converting the services into optical signals on an optical fiber for transmission into a metro network; and an aggregator, coupled for optical communication to a plurality of service collection units, and including a soning module for sorting the services from a plurality of packets according to service type, and a service aggregation module for combining like services for transmission over an appropriate service network,

According to a preferred embodiment, the system service collection unit includes at least one services interface, a packetization module for receiving services from the interface and inserting the services into packets, a tagging module for tagging the packets, and a packet switch, coupled between the tagging module and a Trunk, for switching the packets to at least one service collection unit's optical transceiver.

According to one embodiment of the invention, the system includes a service collection unit including at least one service interface, a packetization module for segmenting a bit stream and adding a tag indicating connection identification for each service, a packet switch for receiving a plurality of tagged segments and inserting them into transmission frames, for example of 2.5 Gigabits per second, preferably synchronous transmission frames such as Packet over SONET/SDH, and a service collection unit's optical transceiver for transmitting the transmission frames,

According to one embodiment, the service collection unit further includes a transmission stream switch coupled between the packet switch and the service collection optical transceiver, for switching data between a plurality of optical fibers.

According to another embodiment, the service collection unit's optical transceiver further includes a wavelength division multiplexer (WDM) for multiplexing the data onto a single optical fiber.

Further according to this embodiment of the invention, the system includes an aggregator unit coupled for upstream and downstream communication to the service collection unit, the aggregator unit including an aggregator's optical transceiver, a framing module for removing packets from a transmission frame, a packet switch for directing packets from a trunk according to destination, a sorting module for sorting services removed from packets, an aggregation module for aggregating like services and sending aggregated services to an appropriate network.

### BRIEF DESCRIPTION OF THE DRAWINGS

The present invention will be further understood and appreciated from the following detailed description taken in conjunction with the drawings in which:
Fig. 1 is a schematic illustration of network positioning;
Fig. 2 is a functional block diagram of a service collection unit according to one embodiment of the invention;
Fig. 3 is a functional block diagram of an aggregator unit according to one embodiment of the invention;
Fig. 4 is a block diagram illustration of a service collection unit according to one embodiment of the invention; and
Fig. 5 is a block diagram illustration of an aggregator unit according to one embodiment of the invention.

### DETAILED DESCRIPTION OF THE INVENTION

The present invention relates to a system and method for data transmission and receiving of data over an optical communication system, particularly at the local, metro access, and metro backbone (core) levels, which permits utilization of the full bandwidth of an optical communications fiber. The method includes encapsulation of service data, as is, in whatever protocol it is received, into a packet which looks and acts like a conventional Packet over SONET (PoS) or similar transmission frame, without requiring conversion of the data from one protocol to another, in a service collection unit. The packets are transmitted from a plurality of service collection units to an aggregator. The aggregator sorts the services from a number of packets coming from a plurality of service collection units and aggregates like services for transmittal over the appropriate network. The services, thus, are transmitted over the corresponding network, as known today, but without requiring conversion to another protocol during the process. In addition, this method permits utilization of the full bandwidth of an optical fiber, by efficient use of a packet switch.

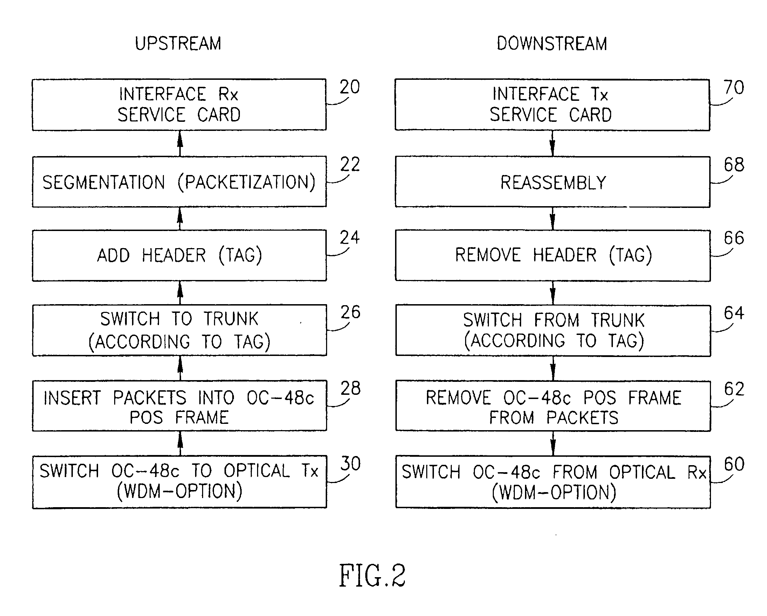

Referring now to Fig. 2, there is shown a functional block diagram of a service collection unit according to one embodiment of the invention. Services to be sent over a network are received through a service interface (block 20) as a bit stream. The bit stream is segmented and arranged into packets (block 22) for further processing, without regard to the content of the data being transmitted.

One particularly suitable method of packet processing has been described in detail in applicant's co-pending application. In brief, the method is as follows. All incoming traffic, i.e., the incoming bit stream, received on a service port, is segmented into variable-length segments. The segments can be of pre-determined fixed length or the segments can have variable length within the particular service, for example, the length of an Ethernet packet. Each segment typically includes a destination address within the source network, a source address within the source network, information representing the length or type of the frame, and data to be transmitted in the frame. In most cases, a plurality of frames make up the entire data transmission.

A header or tag is added to the segment (block 26). The tag includes information including the connection identification for the traffic, which is used herein to mean the connection between the traffic's source and destination end-points, for directing the traffic from its origin to its end point. During the rest of the packet processing procedure, the original segment is treated as a single block of data. It will be appreciated that, in order to connect to networks which use MPLS (Multi-Protocol Label Switching) protocol, the tag can be based on MPLS.

Next, the tagged segment is switched to the appropriate Trunk by a packet switch (block 28). The Trunk encapsulates the tagged segment into a Point-to-Point Protocol (PPP) packet in a frame, preferably a High bit rate Digital Link Control (HDLC)-like frame.

It will be appreciated that different services, whether PDH, Frame-Relay, SONET, (all of which are CBR services), or any other service which can be transmitted over optical fiber, have different internal construction, as required by the specific service. It is a particular feature of the present invention that the internal structure of the frame or segment is irrelevant, as far as encapsulation and packet processing according to the invention are concerned. Rather, every service segment is treated as a block or unit for purposes of encapsulation and transmission over the optical fiber, without regard to the content or form of the data, and without the need to convert from protocol to protocol.

The packets are now inserted into a transmission frame, here illustrated as an OC-48c PoS (Packet over SONET/SDH) frame (block 28), Here, the HDLC-like frames are mapped onto a payload, and then transported to their destination, as if they were conventional PoS frames. If desired, the encapsulated segment can be scrambled, as known, before mapping onto transmission SONET frames.

The transmission frames are now sent to a service collection unit's optical transceiver (block 30), preferably a 2.5Gb transceiver, for transmission over an optical fiber or fibers. According to one embodiment of the invention, an OC-48c stream switch can be provided between the framer and the transceiver to permit the operator to select to which transceiver the various frames will be sent. This transceiver can include a WDM laser with a specific wavelength. A plurality of such WDM transceivers can be combined over one fiber. In this case, the system will have the standard properties of a WDM transmission system.

It will be appreciated that the service collection unit functions both upstream and downstream, performing the inverse functions. The operation of the unit in the downstream direction will be described in detail hereinbelow.

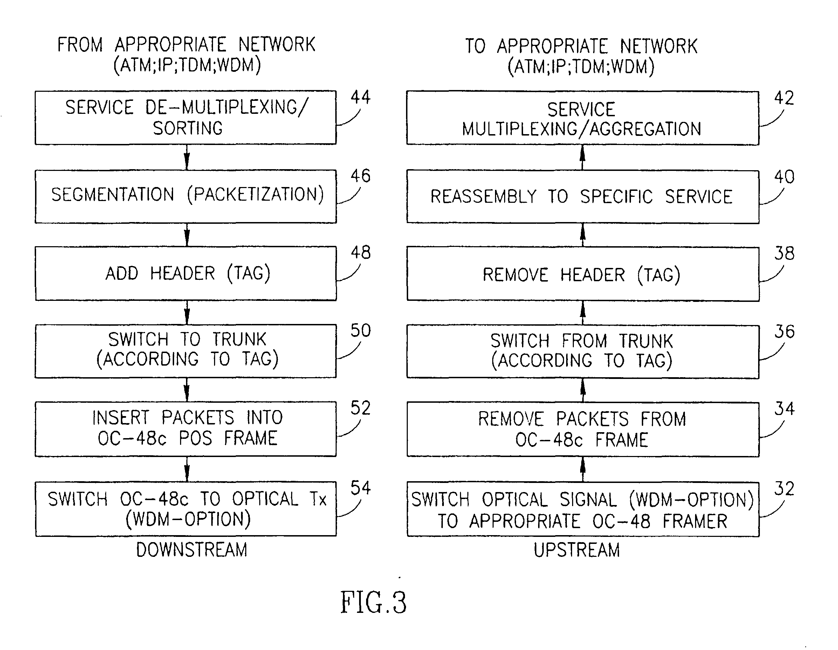

From the service collection unit's optical transceiver, the data is sent over the local or metro access network to an aggregator, whose operation is shown in block diagram form in Fig. 3. It will be appreciated that a number of lasers can be provided, each with its own wavelength, with a WDM multiplexer to unite them all onto a single optical fiber.

The aggregator serves two upstream functions: sorting the services received in OC-48c frames from a variety of service collection units, and aggregating like services for transmission on the corresponding service network. Thus, the aggregator receives the incoming signals from the service collection units in an aggregator's optical transceiver. The optical signal is switched, as by means of a stream switch, to an appropriate transmission framer (block 32), here illustrated as an OC-48c framer. In the case of WDM multiplexing, the aggregator first de-multiplexes the optical signals before sending the signals to the aggregator's optical transceiver.

In the transmission framer, the PPP packets are removed from the transmission frames (block 34). The tags on the various packets are read, and the packets are switched from the trunk to another Trunk or to an Aggregator, according to the connection identification indicated in the packet's tag (block 36). In the service collection portion of the aggregator, the header or tag is removed from the packet (block 38), resulting in a plurality of segments of the various services traffic. Each service is reassembled to its original bit stream (block 40), and the aggregator combines like services together for transmission over the appropriate network, i.e., ATM, IP, TDM, WDM (block 42). The aggregator can combine the services by mere aggregation, loading services of the same kind (and in the same protocol) together onto the network. Alternatively, the aggregator can combine the services by multiplexing several services onto a single fiber over different wavelengths.

It will be appreciated that the aggregator also functions both upstream and downstream, performing the inverse functions. The operation of the system of the present invention in the downstream direction is as follows, with further reference to Figs. 3 and 2, The aggregator receives many services together from each network, i.e., ATM, IP, TDM, WDM, each in its own protocol and at its own bit rate. When the aggregator receives these services from the network, it first sorts the services (block 44), either by de-multiplexing or by separation of aggregated services, according to their end point in the network or their destination network information. The various services are now segmented and packetized in the aggregator (block 46), in the same way in which the upstream services are segmented and packetized in the service collection unit. A header or tag is added to each packet (block 48), indicating its connection identification. According to its tag, each packet is now switched to the appropriate trunk (block 50), and the packets are inserted into a transmission frame (block 52), here illustrated as an OC-48c PoS frame. The transmission frames are now switched to one or more optical fibers for transmission to a service collection unit (block 54). If desired, the optical signals can be multiplexed via a WDM multiplexer onto the optical fiber or fibers.

It is a particular feature of the present invention that, as in upstream transmission, the services are inserted into transmission frames in their original forms and in their original protocols. In other words, the content of the various packets is totally irrelevant to the transmission system and method (except the header or tag information). In this way, substantial savings in resources can be achieved at every level throughout the system.

Referring again to Fig. 2, the incoming transmission frames are received from various trunk ports and switched from the optical transceiver to transmission framers, here shown as OC-48c framers (block 60). If the incoming signals were multiplexed, they must first be de-multiplexed before the receiver. In the framers, the transmission packets or other transmission payload are removed from the OC-48c frames (de-packing) (block 62). The encapsulated PPP packet is de-capsulated by removing the flag, address, and control parameters. If the packet was scrambled before mapping, it is now unscrambled, resulting in the de-capsulated packet or segment. According to the tag on each packet, each packet is switched from the trunk to the local network (block 64).

The resulting tagged segment has its tag stripped off (block 66), leaving the original segment. All the segments of each service are reassembled (block 68) to their original bit stream, which is passed to an interface transceiver in a service card (block 70) and sent out through the appropriate destination Service port, for transmittal to the final destination over the local network appropriate for that service.

It is a particular feature of the present invention that the end user at the access level and metro access level need not install a complicated device for converting all kinds of services data from one protocol to another for transmittal over a network. Rather, it is sufficient that it have the capability to transmit and receive services in their original protocols.

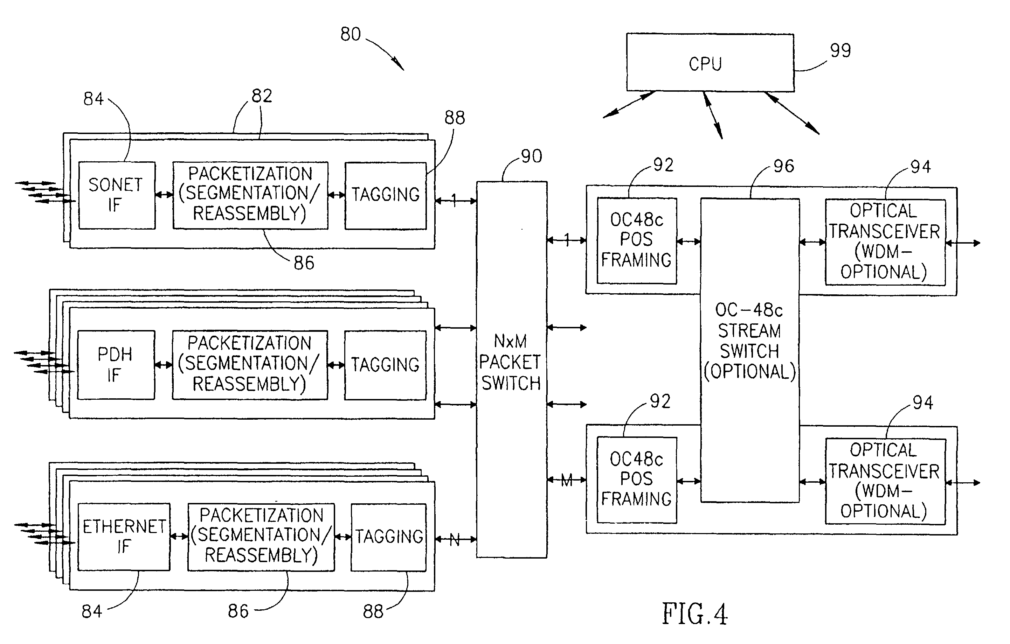

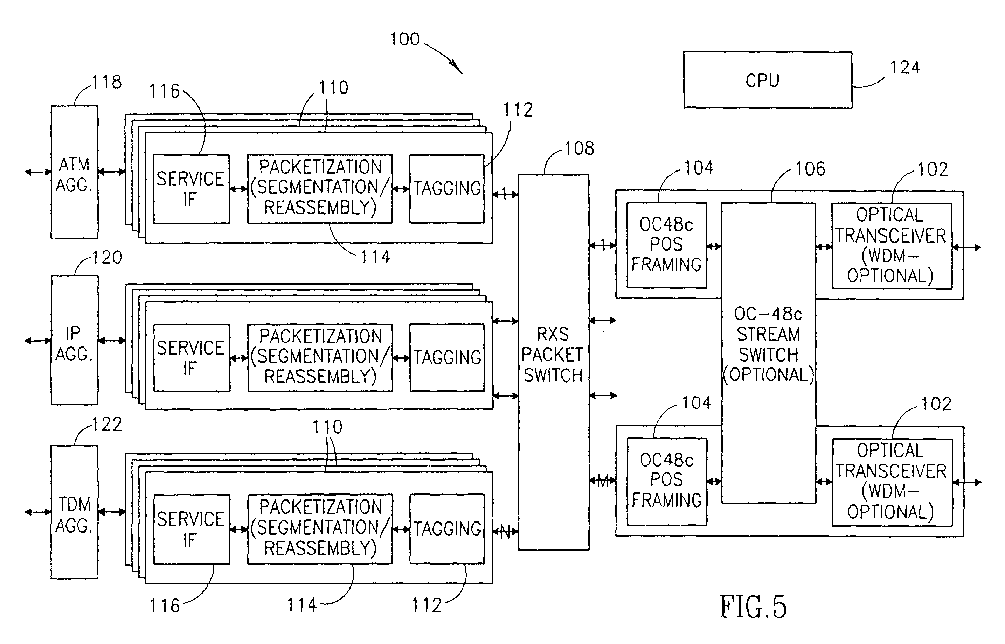

A system for transmitting services over networks according to one embodiment of the invention is shown schematically in Figs. 4 and 5.

Referring now to Fig. 4, there is shown a block diagram illustration of a service collection unit 80 constructed and operative in accordance with one embodiment of the present invention. Service collection unit 80 includes at least one, and preferably a plurality of service cards 82. The number of services depends on the rate of transmission and the number of ports on the switch, as described below. Each service card 82 includes a service interface 84, for interfacing with a group of services, characterized by a common access protocol. Thus, in the illustrated embodiment, the service collection unit is adapted to receive services in SONET, PDH, Fibre Channel, and Ethernet form. Service interface 84 can be, for example, an optical or electrical transceiver, such as those manufactured and sold by Lucent Technologies, New Jersey, USA, and Sumitomo Electric Lightwave, N.C.; USA for SONET and PDH services, or an Ethernet Physical interface for Ethernet and Fibre Channel services.

The services are received through the interface as a bit stream. The bit stream is segmented and arranged into packets in a packetization module 86. Packetization module 86 can be, for example, an FPGA or ASIC for SONET and PDH services, or a MAC for Ethernet or Fibre Channel services, which divides the services into segments and packs the segments in packets for further processing, without regard to the content of the data being transmitted.

A tagging unit 88 is provided for adding a tag to the segment. Tagging unit can include, for example, an FPGA for adding a connection tag including the connection identification between the traffic's source and destination end-points.

Tagging unit 88 is coupled to an N x M packet switch 90 for switching the tagged packets to the appropriate Trunk. Preferably, packet switch 90 is of non-blocking construction, where N=M. One particularly suitable packet switch is a 16 X 16 switch fabric, where each port is 2.5 Gigabits/sec, for example a fabric chipset Prizma EP (PRS 64) manufactured and marketed by IBM Corp., NY, USA. This packet switch has an aggregate bandwidth of 40 Gigabit per second, which can be filled in a flexible manner by the services. Thus, the operator can define how much of which service or which packets are output onto which port, so that a total of 2.5 Gigabit per second per port is reached, without being concerned in any way with the form or protocol of the original data content. M ports of switch 90 are usually connected to up to M trunks, each of which has an aggregate 2.5 Gigabit per second capacity. N ports of switch 90 are connected to N services cards. Each service card has several service ports, which can be muxed together by an appropriate multiplexer/demultiplexer. The number of such ports depends on the service port bandwidth (from 2 Megabit per second up to 1 Gbs). For example, if a service is OC-12, which has bandwidth of 622 Mbps, the number of ports could be 4, in order to fill all 2.5 Gbps aggregate input of the switch.

In the Trunk, the tagged segments are encapsulated into a Point-to-Point Protocol (PPP) packet in a frame, preferably a High bit rate Digital Link Control (HDLC)-like frame. The frame also includes a flag, to indicate the start of a transmission, source and destination address data within the communication system, control parameters, and a frame correction signal (FCS) to indicate the end of the transmission.

In the illustrated embodiment, packet switch 90 is coupled, in turn, to a plurality of framers 92, one for each 2.5 Gb/sec bit stream. Each framer 92 can be, for example, a SONET OC-48c framer, catalog number VSC9112, manufactured by Vitesse Semiconductor Corp., CA, USA, or the OC-48c framer manufactured by Lucent Microelectronics, New Jersey, USA. In framer 92, the HDLC-like frames are mapped onto a payload, e.g., SONET OC-48c payload, as a transmission frame, preferably a Packet over SONET/SDH (PoS) frame, and then transported to their destination as if they were conventional PoS frames.

Framers 92 are coupled to a plurality of optical transceivers 94, the type depending upon the type of transmission frame. According to the illustrated embodiment, each transceiver 94 is preferably a 2.5Gb transceiver, such as that manufactured by Lucent Technologies, New Jersey (USA), and Sumitomo Electric Lightwave NC, (USA), or OCP Inc., CA (USA).

This is because 2.5 Gbps transceivers are capable of working with almost all bit rates in the desired range, for example, 10 Mbps to 2.5 Gbps. This bit rate (2.5 Gbps) is the most common and cost effective today, as related to SONET/SDH hierarchical systems. In addition, frames and bit rates related to Gigabit Internet could be used instead, such as 10 Gbps.

If it is desired to use a WDM multiplexer in the system, different transceivers are required. While they can be the same bit rate, WDM transceivers have a different structure, and the wavelength must be specified according to DWDM related standards.

An optional OC-48c stream switch 96 can be provided between framers 92 and transceivers 94 for switching between the various transceivers. One suitable stream switch is a cross-point matrix, for example the VSC834 17x17 2.5 Gb/s Cross-point Switch manufactured by Vitesse Semiconductor Corp., CA, USA.

Alternatively, packet switch 90 can direct packets directly into packet frames, which are loaded on to the optical transceivers, without any intermediate transmission framers. In this case, an optional stream switch 96 can be coupled directly between the packet switch and the service collection unit's optical transceivers, for providing wavelength services from the packet switch to transceivers with different wavelengths.

It will be appreciated that a CPU controller 99 is coupled to the elements of the service collection unit, to control all the various functions therein.

From the transceivers 94, the data is sent over the access or metro access network to an aggregator 100, one embodiment of which is shown in block diagram form in Fig. 5.

Aggregator 100 serves two upstream functions: sorting the services received in OC-48 frames from a variety of service collection units, and aggregating like services for transmission on the corresponding service network, and the inverse functions (sorting services received from a service network and aggregating services according to destination) downstream. Therefore, the aggregator includes many of the same elements as the service collection unit.

Thus, aggregator 100 includes a plurality of aggregator's optical transceivers 102, substantially similar to optical transceivers 94, for transmission to the metro backbone or metro access networks to service collection units. Optical transceivers 102 are coupled to a plurality of framers 104, substantially similar to framers 92. An optional stream switch 106, here shown as an OC-48c stream switch, can be provided between transceivers 102 and framers 104 to permit switching of frames between transceivers and framers.

Framers 104 are coupled to an R x S packet switch 108, substantially similar to packet switch 90. Packet switch 108 provides switching between framers 104 and a plurality of service cards 110, each representing a different service, grouped according to type of services, as indicated by the tag on the packet. Thus, packet switch 108 performs most of the sorting of services in the aggregator. Each aggregator 100 includes a tagging module 112 for adding or removing the tag on a packetized service. Tagging module 112 is substantially similar to tagging module 88. Tagging modules 112 are each coupled to a packetization module 114 for segmentation of a bit stream and reassembly of segments, depending on whether the data is going upstream or downstream. Packetization module 114 is substantially similar to packetization module 86. Each packetization module 114 is coupled to a service interface 116. Since each service card 110 accepts a single type of service, only the interface for the appropriate interface is required on card 110. Service interfaces 116 are substantially similar to service interfaces 84.

In addition to the elements of the service collection unit, aggregator 100 also includes a plurality of service aggregation modules 118, 120, 122. In the illustrated embodiment, three aggregation modules are shown. One aggregation module is provided for aggregation of ATM services (118), which can be an ATM Multiplexer based on a switch matrix, such as the IBM "Prizma", or Lucent "Atlanta" chip set. Another aggregation module is provided for aggregation of IP services (120), which can be an IP switch based on, for example, Galnet2L2/L3 switch, manufactured by Galileo Technology (Israel)

A third aggregation module is provided for aggregation of TDM services (122), which can be a TDM multiplexer /demultiplexer based on, for example, VSC8005, manufactured by Vitesse Semiconductor Corp., CA, USA. It will be appreciated that other aggregation modules can be added as required. Each aggregation module is coupled to the appropriate network for upstream and downstream transmission of data in the designated protocol.

Alternatively, in the case of services such as Gigabit Internet or Fibre Channel, the services can be directly connected to the network, and no aggregation (i.e., multiplexing) is required.

It will be appreciated that a CPU controller 124 is coupled to the elements of the aggregator, to control all the various functions therein. It will also be appreciated by those skilled in the art that the method of the present invention can be carried out by means of any suitable hardware and software.

As can be seen with further reference to Fig. 1, the system of the invention is particularly useful in the access and metro access networks. ONT units 80 can be efficiently utilized at the enterprise or local access level, as well as at the metro access level, while aggregators 100 are particularly useful in the metro access and metro backbone networks.

It will be appreciated that the invention is not limited to what has been described hereinabove merely by way of example. Rather, the invention is limited solely by the claims which follow.

## Claims

1. A system for data transmission in packets over an optical network, the system being **characterised by**:
a service collection unit (80) including
a collection module for collecting a plurality of services data to be transmitted;
a processing module for processing the services in their original protocols into packets; and
a packet transmission module for converting the services into optical signals on an optical fiber for transmission into a metro network; and
an aggregator (100), coupled to a plurality of said service collection units for upstream and downstream optical communication, and including;
a sorting module for sorting the services from a plurality of packets according to service type; and
a service aggregation module (118, 120, 122) for combining like services for transmission over an appropriate service network.

2. The system according to claim 1, wherein said packet transmission module includes a multiplexer/demultiplexer for multiplexing/demultiplexing like services onto an optical fiber in an appropriate network.

3. The system according to claim 1, wherein said service aggregation module includes a multiplexer/demultiplexer for multiplexing/demultiplexing like services onto an optical fiber in a an appropriate network.

4. The system according to any of the preceding claims, wherein said service collection unit (80) comprises:
at least one services interface;
a packetization module for receiving services from said interface and inserting the services into packets;
a tagging module (88) for tagging said packets; and
a packet switch, coupled between said tagging module and a Trunk, for switching said packets to at least one service collection unit's optical transceiver.

5. The system according to claim 3, wherein the service collection unit's optical transceiver includes at least one wavelength specific laser, and further includes a wavelength division multiplexer/demultiplexer WDM for multiplexing/demultiplexing the number of optical transceivers with different optical signals, wavelengths, onto/from a single optical fiber.

6. The system according to claim 3, wherein said tagging module is a Multi-Protocol Label Switching MPLS tagging module for adding a tag based on MPLS to each of said packets.

7. The system according to claim 3, further comprising a module in said Trunk for encapsulating said tagged packets into Point-to-Point Protocol PPP packets.

8. The system according to claim 7, wherein said service collection unit further comprises a stream switch, coupled between the packet switch and the service collection unit's optical transceivers, for switching PPP packets between optical transceivers.

9. The system according to claim 7, wherein said PPP packets are arranged in a HDLC-like frame.

10. The system according to claim 4, wherein said service collection unit further comprises at least one transmission frame per stream for mapping said tagged packets onto transmission frames, coupled between the packet switch and the service collection unit's optical transceivers.

11. The system according to claim 10, wherein said transmission framers are Packet over SONET/SDH PoS framers.

12. The system according to claim 10, wherein said service collection unit further comprises a stream switch coupled between said transmission framers and said transceivers for switching transmission frames between transceivers.

13. The system according to claim 10, wherein said collection unit further comprises a stream switch, coupled between the transmission framers and the service collection unit's optical transceivers, for switching transmission frames between optical transceivers.

14. The system according to claim 3, wherein said aggregator unit, in an upstream mode, includes:
an aggregator optical transceiver,
a packet switch serving as a sorting module, for directing packets from a trunk, received in said aggregator optical transceiver, according to destination;
a tagging module for removing a tag from said packets; and
a service aggregation module for aggregating like services, said aggregation module being coupled to an appropriate network using a designated protocol.

15. The system according to claim 14, further comprising:
a framing module, coupled between said aggregator's optical transceiver and said packet switch, for removing packets from a transmission frame.

16. The system according to claim 14, wherein the service collection unit's optical transceiver includes at least one wavelength specific laser, and further includes a wavelength division multiplexer/demultiplexer WDM for multiplexing/demultiplexing the number of optical transceivers with different optical signals wavelengths onto/from a single optical fiber.

17. The system according to claim 14, wherein said aggregator's tagging module is a Multi-Protocol Label Switching MPLS tagging module for adding a tag based on MPLS to each of said packets.

18. The system according to claim 1, wherein said aggregator, in a downstream mode, includes:
an aggregator's optical transceiver for receiving aggregated services in their original protocols;
a sorting module for de-multiplexing said received services;
a packet processing module for processing the services into packets in a frame, tagging, sorting and multiplexing according to destination; and
said service collection unit, in a downstream mode, includes:
a service collection unit's transceiver coupled to said aggregator's optical transceiver for downstream optical communication;
a de-packing module for de-packing the frames so as to retrieve a plurality of service packets;
a processing module for removing original services from said packets; and
a transmission module for transmitting services according to destination.

19. The system according to claim 18, wherein said packet processing module further comprises a transmission framer for inserting processed packets into transmission frames; and
said transmission module is arranged to load said transmission frames onto an optical fiber.

## Patentansprüche

1. System für die Datenübertragung in Paketen über ein optisches Netzwerk, **gekennzeichnet durch**
eine Service-Erfassungseinheit (80) mit
einem Erfassungs-Modul zum Erfassen einer Vielzahl von Service-Daten, die übertragen werden sollen,
einem Verarbeitungs-Modul zum Verarbeiten der Service-Leistungen in ihren Original-Protokollen in Pakete,
einem Paket-Übertragungs-Modul zur Umwandlung der Service-Leistungen in optische Signale auf einem Lichtleiter zur Übertragung in ein Metro-Netzwerk, und
eine Zusammenführ-Vorrichtung (100), die mit einer Vielzahl von Service-Erfassungseinheiten zur stromaufwärts und stromabwärts erfolgenden optischen Kommunikation gekoppelt sind, und mit
einem Sortier-Modul zum Sortieren der Service-Leistungen aus einer Vielzahl von Paketen entsprechend dem Service-Typ, und
einem Service-Zusammenführ-Modul (118, 120, 122) zum Kombinieren gleicher Service-Leistungen für die Übertragung über ein geeignetes Service-Netzwerk.

2. System nach Anspruch 1, bei dem das Paket-Übertragungsmodul einen Multiplexer/Demultiplexer zum Multiplexen/Demultiplexen gleicher Service-Leistungen auf einen Lichtleiter in einem entsprechenden Netzwerk aufweist.

3. System nach Anspruch 1, bei dem das Service-Zusammenführmodul einen Multiplexer/Demultiplexer zum Multiplexen/Demultiplexen gleicher Service-Leistungen auf einen Lichtleiter in einem geeigneten Netzwerk aufweist.

4. System nach einem der vorausgehenden Ansprüche, bei dem die Service-Erfassungseinheit (80) aufweist:
mindestens eine Service-Schnittstelle,
ein Paketbildungs-Modul zur Aufnahme von Service-Leistungen aus der Schnittstelle und zum Einführen der Service-Leistungen in Pakete,
ein Markier-Modul (88) zum Markieren der Pakete, und
einen Paketschalter, der zwischen das Markier-Modul und einen Übertragungsweg eingekoppelt ist, um die Pakete an mindestens einen optischen Senderempfänger der Service-Erfassungseinheit anzukoppeln.

5. System nach Anspruch 3, bei dem der optische Sendeempfänger der Service-Erfassungseinheit mindestens einen wellenlängenspezifischen Laser sowie einen Wellenlängen-Teilungs-Multiplexer/Demultiplexer WDM zum Multiplexen/Demultiplexen der Anzahl von optischen Sendeempfängern mit optischen Signalen unterschiedlicher Wellenlängen auf einen /von einem einzelnen Lichtleiter aufweist.

6. System nach Anspruch 3, bei dem das Markier-Modul ein Mehrfach-Protokoll-Labelschalt-Markier-MPLS-Modul zum Hinzufügen einer Markierung auf der Basis von MPLS an jedes der Pakete ist.

7. System nach Anspruch 3, bei dem ein Modul in dem Übertragungsweg zum Einkapseln der markierten Pakete in Punkt-zu-Punkt-Protokoll PPP-Pakete vorgesehen ist.

8. System nach Anspruch 7, bei dem die Service-Erfassungseinheit ferner einen Stromschalter aufweist, der zwischen den Paket-Schalter und die optischen Sendeempfänger der Service-Erfassungseinheit zum Schatten von PPP-Paketen zwischen optischen Sendeempfängern gekoppelt ist.

9. System nach Anspruch 7, bei dem die PPP-Pakete in einem HDLC-artigen Rahmen angeordnet sind.

10. System nach Anspruch 4, bei dem die Service-Erfassungeinheit ferner mindestens einen Übertragungs-Rahmen pro Strom zum Abbilden der markierten Pakete auf Übertragungsrahmen aufweist, die zwischen dem Paket-Schalter und den optischen Sendeempfängern der Service-Erfassungseinheit gekoppelt sind.

11. System nach Anspruch 10, bei dem die Übertragungs-Framer Paket-über-SONET/SDH PoS-Framer sind.

12. System nach Anspruch 10, bei dem die Service-Erfassungseinheit ferner einen Stromschalter aufweist, der zwischen die Übertragungs-Framer und die Sendempfänger zum Schalten von Übertragungs-Framern zwischen Sendeempfängern gekoppelt ist.

13. System nach Anspruch 10, bei dem die Erfassungs-Einheit ferner einen Stromschalter aufweist, der zwischen die Übertragungs-Framer und die optischen Sendeempfänger der Service-Erfassungseinheit zum Schalten von Übertragungs-Rahmen zwischen optischen Senderempfängern gekoppelt ist.

14. System nach Anspruch 3, bei dem die Zusammenführungs-Einheit in einem Stromaufwärts-Betrieb aufweist:
einen optischen Erfassungs-Sendeempfänger,
einen Paket-Schalter, der als Sortier-Modul dient, um Pakete von einem Übertragungsweg aus zu richten, der in dem optischen Zusammenführungs-Sendeempfänger entsprechend der Bestimmung aufgenommen ist,
ein Markier-Modul zum Entfernen einer Markierung von den Paketen, und
ein Service-Erfassungs-Modul zum Erfassen gleicher Serviceleistungen, wobei das Erfassungs-Modul mit einem entsprechenden Netzwerk gekoppelt ist, das
ein designiertes Protokoll verwendet.

15. System nach Anspruch 14, **gekennzeichnet durch** ein Framing-Modul, das zwischen dem optischen Sendeempfänger der Erfassimgs-Vorrichtung und dem Paket-Schalter gekoppelt ist, um Pakete aus einem Übertgragungsrahmen zu entfernen.

16. System nach Anspruch 14, bei dem der optische Sendeempfänger der Service-Erfassungs-Einheit mindestens einen wellenlängenspezifischen Laser und ferner einen Wellenlängenteilungs-Multiplexer/Demultiplexer WDM zum Multiplexen/ Demultiplexen der Anzahl von optischen Sendeempfängern mit optischen Signalen unterschiedlicher Wellenlängen an einem /aus einem einzelnen Lichtleiter aufweist.

17. System nach Anspruch 14, bei der das Erfassungs-Markier-Modul ein Mehrfach-Protokoll-Labelschalt MPLS-Markier-Modul ist, das eine Markierung auf der Basis von MPLS jedem der Pakete hinzufügt.

18. System nach Anspruch 1, bei dem die Erfassungs-Vorrichtung in einem stromabwärts gerichteten Betrieb aufweist:
einen optischen Sendeempfänger für die Erfassungs-Vorrichtung zum Aufnehmen von erfassten Serviceleistungen in ihren originalen Protokollen,
ein Sortier-Modul zum Demultiplexen der empfangenen Serviceleistungen,
ein Paket-Verarbeitungs-Modul zum Verarbeiten der Service-Leistungen in Pakete in einem Rahmen, Markieren, Sortieren und Multiplexen je nach der Bestimmung, und
die Service-Erfassungseinheit in einem stromabwärts gerichteten Betrieb aufweist:
einen Sendeempfänger einer Service-Erfassungs-Einheit, die mit dem optischen Sendeempfänger der Erfassungs-Vorrichtung für eine stromabwärts gerichtete optische Kommunikation gekoppelt ist,
ein Auspack-Modul zum Auspacken der Rahmen, so dass eine Vielzahl von Service-Paketen wieder aufgefunden werden,
ein Prozessor-Modul zum Entfernen von originalen Serviceleistungen aus den Paketen, und
ein Übertragungs-Modul zum Übertragen von Serviceleistungen entsprechend der Bestimmung.

19. System nach Anspruch 18, bei dem das Paket-Verarbeitungs-Modul ferner eine Übertragungs-Framer zum Einsetzen von verarbeiteten Paketen in Übertragungsrahmen aufweist, und
das Übertragungs-Modul so ausgelegt ist, dass es die Übertragungsrahmen auf einen Lichtleiter lädt.

## Revendications

1. Système de transmission de données par paquets sur un réseau optique, le système étant **caractérisé par** :
une unité de collecte de services (80) comprenant :
un module de collecte pour collecter une pluralité de données de services à transmettre ;
un module de traitement pour traiter les services en paquets dans leurs protocoles originaux ; et
un module de transmission de paquets pour convertir les services en signaux optiques sur une fibre optique pour une transmission dans un réseau métropolitain ; et
un agrégateur (100) couplé à une pluralité desdites unités de collecte de services pour communication optique amont et aval, et comprenant :
un module de tri pour trier les services à partir d'une pluralité de paquets selon le type de service ; et
un module d'agrégation de services (118, 120, 122) pour combiner des services similaires pour une transmission sur un réseau de service approprié.

2. Système selon la revendication 1, dans lequel ledit module de transmission de paquets comprend un multiplexeur/démultiplexeur pour multiplexer/démultiplexer des services similaires sur une fibre optique dans un réseau approprié.

3. Système selon la revendication 1, dans lequel ledit module d'agrégation de services comprend un multiplexeur/démultiplexeur pour multiplexer/démultiplexer des services similaires sur une fibre optique dans un réseau approprié.

4. Système selon l'une quelconque des revendications précédentes, dans lequel ladite unité de collecte de services (80) comprend :
au moins une interface de services ;
un module de groupage par paquets pour recevoir des services de ladite interface et insérer les services dans des paquets ;
un module d'étiquetage (98) pour étiqueter lesdits paquets ; et
un commutateur de paquets, couplé entre ledit module d'étiquetage et une jonction, pour commuter lesdits paquets vers au moins un émetteur-récepteur optique d'unité de collecte de services.

5. Système selon la revendication 3, dans lequel l'émetteur-récepteur optique de l'unité de collecte de services comprend au moins un laser d'une longueur d'onde spécifique et comprend en outre un multiplexeur/démultiplexeur par répartition en longueur d'onde (WDM) pour multiplexer/démultiplexer la quantité d'émetteurs-récepteurs optiques ayant des signaux optiques et des longueurs d'onde différents sur et/ou à partir d'une seule fibre optique.

6. Système selon la revendication 3, dans lequel ledit module d'étiquetage est un module d'étiquetage MPLS (commutation multiprotocole d'étiquettes) pour ajouter une étiquette basée sur MPLS à chacun desdits paquets.

7. Système selon la revendication 3, comprenant en outre un module dans ladite jonction pour encapsuler lesdits paquets étiquetés en paquets PPP (protocole point à point).

8. Système selon la revendication 7, dans lequel ladite unité de collecte de services comprend en outre un commutateur de trains de données, couplé entre le commutateur de paquets et les émetteurs-récepteurs optiques de l'unité de collecte de services, pour commuter les paquets PPP entre les émetteurs-récepteurs optiques.

9. Système selon la revendication 7, dans lequel lesdits paquets PPP sont arrangés dans une trame de type HDLC.

10. Système selon la revendication 4, dans lequel ladite unité de collecte de services comprend en outre au moins une trame de transmission par train de données pour mapper lesdits paquets étiquetés aux trames de transmission, couplée entre le commutateur de paquets et les émetteurs-récepteurs optiques de l'unité de collecte de services.

11. Système selon la revendication 10, dans lequel lesdits trameurs de transmission sont des trameurs PoS (paquets sur SONET/SDH).

12. Système selon la revendication 10, dans lequel ladite unité de collecte de services comprend en outre un commutateur de trains de données couplé entre lesdits trameurs de transmission et lesdits émetteurs-récepteurs pour commuter des trames de transmission entre des émetteurs-récepteurs.

13. Système selon la revendication 10, dans lequel ladite unité de collecte de services comprend en outre un commutateur de trains de données, couplé entre les trameurs de transmission et les émetteurs-récepteurs optiques de l'unité de collecte de services, pour commuter des trames de transmission entre des émetteurs-récepteurs optiques.

14. Système selon la revendication 3, dans lequel ladite unité d'agrégation, dans un mode amont, comprend :
un émetteur-récepteur optique d'agrégateur ;
un commutateur de paquets servant de module de tri pour diriger des paquets depuis une jonction, reçus dans ledit émetteur-récepteur optique d'agrégateur, en fonction de leur destination ;
un module d'étiquetage pour supprimer une étiquette desdits paquets ; et
un module d'agrégation de services pour agréger des services similaires, ledit module d'agrégation étant couplé à un réseau approprié à l'aide d'un protocole désigné.

15. Système selon la revendication 14, comprenant en outre :
un module de verrouillage de trame, couplé entre ledit émetteur-récepteur optique d'agrégateur et ledit commutateur de paquets, pour supprimer des paquets d'une trame de transmission.

16. Système selon la revendication 14, dans lequel l'émetteur-récepteur optique de l'unité de collecte de services comprend au moins un laser de longueur d'onde spécifique, et comprend en outre un multiplexeur/démultiplexeur par répartition en longueur d'onde (WDM) pour multiplexer/démultiplexer la quantité d'émetteurs-récepteurs optiques ayant des signaux optiques et des longueurs d'onde différents sur et/ou à partir d'une seule fibre optique.

17. Système selon la revendication 14, dans lequel ledit module d'étiquetage de l'agrégateur est un module d'étiquetage MPLS (commutation multiprotocole d'étiquettes) pour ajouter une étiquette basée sur MPLS à chacun desdits paquets.

18. Système selon la revendication 1, dans lequel ledit agrégateur, dans un mode aval, comprend :
un émetteur-récepteur optique d'agrégateur pour recevoir des services agrégés dans leurs protocoles originaux ;
un module de tri pour démultiplexer lesdits services reçus ;
un module de traitement de paquets pour traiter les services dans des paquets dans une trame, étiqueter, trier et multiplexer en fonction de la destination ; et
ladite unité de collecte de services, dans un mode aval, comprend :
un émetteur-récepteur d'unité de collecte de services couplé au dit émetteur-récepteur optique d'agrégateur pour une communication optique aval ;
un module de dépaquetage pour dépaqueter les trames de manière à récupérer une pluralité de paquets de services ;
un module de traitement pour retirer les services originaux desdits paquets ; et
un module de transmission pour transmettre des services en fonction de la destination.

19. Système selon la revendication 18, dans lequel ledit module de traitement de paquets comprend en outre un trameur de transmission pour insérer des paquets traités dans des trames de transmission ; et
ledit module de transmission est arrangé pour charger lesdites trames de transmission sur une fibre optique.
